# FASCICULE DE BREVET EUROPEEN

(11) **EP 2 596 045 B1**
(45) Date de publication et mention de la délivrance du brevet: **31.12.2014**
(21) Numéro de dépôt: 11724372.5
(22) Date de dépôt: 08.06.2011
(51) Int. Cl.: C08G 63/08, C08G 63/52, C08G 63/60

(54) **RESINES DE POLYESTERS INSATURES, MODIFIEES PAR SUBSTITUTION PAR L'ACIDE LACTIQUE D'UN COMPOSANT ACIDE ET ALCOOL DU POLYESTER**
MODIFIZIERTE UNGESÄTTIGTE POLYESTERHARZE ANHAND DER SUBSTITUTION EINES SÄURE- UND ALKOHOLBESTANDTEILS DES POLYESTERS MIT MILCHSÄURE
UNSATURATED POLYESTER RESINS MODIFIED BY SUBSTITUTION, WITH LACTIC ACID, OF AN ACID AND ALCOHOL COMPONENT OF THE POLYESTER

(30) Priorité: 22.07.2010 FR 1003105
(43) Date de publication de la demande: 29.05.2013
(73) Titulaire: CCP Composites, 92400 Courbevoie (FR)
(72) Inventeur: CLEDAT, Guillaume, F-59000 Lille (FR); GADEA UGARTE, Oscar, E-09200 Miranda de Ebro BU (ES); MAZAJCZYK, Jérôme, F-60280 Clairoix (FR); ROYO, Jose Ignacio, E-26003 Logrino (La Rioja) (ES)
(74) Mandataire: Leyder, Francis
(86) Numéro de dépôt international: PCT/EP2011/002796
(87) Numéro de publication internationale: WO 2012/010234

(56) Documents cités:
- FR-A1- 2 240 933
- US-A- 3 784 585
- US-A- 4 888 413
- DATABASE CA [Online] CHEMICAL ABSTRACTS SERVICE, COLUMBUS, OHIO, US; SU, TAO ET AL: "An unsaturated polyester containing lactate segments", XP002608866, extrait de STN Database accession no. 1998:99760 & REGUXING SHUZHI , 12(4), 22-25 CODEN: RESHEQ, 1997,

## Description

L'invention concerne une résine de polyester insaturé modifié par une matière première d'origine renouvelable qui est l'acide lactique, une composition thermodurcissable la comprenant et les diverses utilisations de cette résine et composition thermodurcissable, en particulier pour des pièces moulées comme les BMC (Bulk Moulding Compound), SMC (Sheet Moulding Compound) et pultrudés ou pour un usage général comme dans les revêtements, adhésifs, stratifiés, mastics, produits d'injection RTM (Resin Transfer Moulding) ou de projection.

Les résines polyesters insaturés sont des résines de synthèse bien connues par l'homme du métier et leur utilité dans la préparation des pièces composites moulées ou stratifiées ou sous forme de revêtements de surface avec des performances mécaniques élevées et des avantages significatifs par rapport aux métaux (pièces plus légères pour performances élevées et avec des meilleures performances de résistance à l'impact). Comme pour d'autres résines de synthèse, se pose de plus en plus la question de l'impact environnemental résultant de la synthèse et de l'utilisation de ces résines dans leurs diverses applications et, plus particulièrement, la question des toxicités, émissions COV, disponibilité sur le long terme des composants utilisés dans leur synthèse et du recyclage des produits finis dans un contexte de développement durable global sans nuire à l'environnement et à l'homme. Dans ce contexte, se pose la question de remplacement des composants de ces résines, d'origine pétrolière (source épuisable) par des composants d'origine naturelle renouvelable souvent appelés sous le terme « biosourcés », lesquels composants sont plus vertueux pour l'environnement et compatibles avec le développement durable.

L'acide lactique, qui porte une fonction hydroxy et une fonction acide carboxy, est un exemple de matière première d'origine agricole renouvelable à partir de la fermentation de l'amidon et des sucres. EP 1 444 285 décrit, par exemple, l'utilisation d'oligomères d'acide lactique en polycondensation avec un monomère bifonctionnel insaturé comme l'acide itaconique et un polyol pour préparer des polymères biodégradables à taux molaire élevé d'acide lactique par rapport au monomère bifonctionnel (diacide) insaturé (80-95% pour 5-20%). Cependant, le taux élevé d'acide lactique devrait affecter la résistance à l'eau (hydrolyse) du produit final comme ses performances mécaniques et sa résistance chimique compte tenu du faible taux d'insaturation de la résine obtenue (1 insaturation pour 4 à 10 motifs d'acide lactique).

US 4,644,038 décrit des copolymères insaturés portant des insaturations vinyl latérales par copolymérisation d'acide lactique (dimère cyclique) et d'un époxy insaturé.

WO 2006/053936 décrit des copolymères d'hydroxy acides avec des diols et modifiés en bout de chaîne par des groupement insaturés, comme polymères réticulés biodégradables.

La difficulté dans cette démarche est de trouver un compromis dans le choix de ces composants de substitution afin que, tout en permettant ce remplacement, les performances d'application de résines qui en résultent ne soient pas significativement affectées et si possible (encore plus difficile) les améliorer par rapport aux performances des résines courantes. D'autre part, dans la synthèse actuelle des résines polyesters, certaines réactions secondaires (comme la cyclisation des glycols) génèrent une perte de glycol, nécessitant l'utilisation anticipée d'un excès significatif de glycol pour compenser cette perte mais avec comme conséquence de cette surconsommation de glycol (en excès significatif par rapport à l'acide) la perte de matière première mais également la pollution des eaux d'estérification qui nécessitent ainsi un traitement pour éliminer ce glycol en excès. D'autres réactions secondaires (addition de glycol sur maléique type Ordelt) affectent le contrôle et la reproductibilité de la structure de la résine finale ainsi obtenue. Plus particulièrement, la réaction secondaire d'Ordelt est une addition du glycol de type Michael sur la double liaison de l'acide insaturé. Cette réaction indésirable donne une structure branchée et réduit l'insaturation du polymère pendant sa synthèse. A travers cette réaction, on perd le contrôle de la structure du polymère et une partie de la réactivité du polyester. La structure finale de la résine obtenue est ainsi affectée par ces réactions secondaires qui, par conséquent, affectent également la structure finale réticulée liée et ainsi les performances mécaniques du réseau tridimensionnel obtenu. Se pose également une question de traitement des effluents aqueux dans lesquels se retrouve ledit glycol (pollution + coût du traitement des effluents). Plus particulièrement, dans le contexte du recyclage des produits finis obtenus de ces résines, il y a besoin de plus en plus de mettre au point des résines permettant le recyclage potentiel des produits finis avec un degré de biodégradabilité (en particulier en présence de microorganismes) amélioré par rapport aux résines non modifiées. Ce degré de biodégradabilité est contrôlé dans le temps en fonction de l'usage ciblé.

Plus particulièrement, la présente invention vise la mise au point d'une résine modifiée par remplacement par l'acide lactique (à la fois composant acide et alcool), partiellement ou totalement, de certains composants d'origine non renouvelable comme l'anhydride ou diacide phtalique et/ou remplacement partiel pour l'anhydride maléique ou acide fumarique pour le composant acide et des polyols parmi le dipropylène glycol (DPG) et/ou diéthylène glycol (DEG) dans le composant polyol et ceci sans affecter les performances mécaniques essentielles de la résine finale, ceci avec un meilleur contrôle des réactions secondaires et de la perte de glycol et une meilleure reproductibilité de la structure finale de la résine ainsi obtenue (% de structure Ordelt réduit). Plus particulièrement, la présence d'acide lactique confère à la résine obtenue une meilleure aptitude à la mouillabilité des fibres de verre et des charges. Plus particulièrement encore, pour certaines compositions plus spécifiques de polyester insaturé où une partie d'anhydride maléique ou d'acide fumarique (insaturé) est remplacée par l'acide lactique (saturé), on observe de manière surprenante que, malgré la réduction de la densité de réticulation des produits finaux obtenus, leurs performance mécaniques ne sont pas affectées comme on aurait pu attendre logiquement. Les compositions de référence pour comparer l'effet de la modification par l'acide lactique sont des compositions typiques utilisées pour certaines applications visées, pour être améliorées par cette invention.

Le premier objet de l'invention concerne une résine polyester insaturé comprenant au moins un polyester insaturé a) modifié par l'acide lactique dans des conditions spécifiques de remplacement de l'anhydride phtalique ou d'un polyol dudit polyester a) et au moins un comonomère b) copolymérisable avec ledit polyester a).

Le deuxième objet selon l'invention est une composition thermodurcissable comprenant au moins une résine telle que définie selon le premier objet de l'invention.

Fait également partie de l'invention, l'utilisation de la résine selon le premier objet de l'invention comme liant dans des compositions thermodurcissables et, plus particulièrement, pour compositions de moulage ou d'usage général.

Finalement, l'invention concerne aussi les produits finaux obtenus par la réticulation d'au moins une résine comme définie selon le premier objet de l'invention ou d'au moins une composition thermodurcissable comme défini selon le deuxième objet de l'invention. Plus particulièrement, ces produits sont à usage général, comme les revêtements, des adhésifs, des mastics, du béton polymère ou des stratifiés ou des produits d'injection RTM ou de projection ou ces produits finaux sont des pièces moulées par injection, compression ou pultrusion.

Donc, le premier objet de la présente invention concerne une résine de polyester insaturé comprenant : a) au moins un polyester insaturé et b) au moins un comonomère copolymérisable avec ledit polyester, ledit polyester insaturé a) étant modifié par l'acide lactique en substitution, dans la composition d'un polyester initial, de :
i) jusqu'à 90%, de préférence jusqu'à 80% et plus préférentiellement jusqu'à 60% en moles de l'anhydride phtalique du composant acide dudit polyester initial, dont le composant acide comprend en moles de 20 à 80%, de préférence de 30 à 70% d'anhydride maléique (AM) et/ou d'acide fumarique, et de 80 à 20%, de préférence de 70 à 30% d'anhydride phtalique (AP), et dont le composant polyol comprend en moles de 50 à 100% de propylène glycol (PG), de préférence 100% de PG, et de 0 à 50% d'un polyol supplémentaire sélectionné parmi l'éthylène glycol (EG) et/ou le di éthylène glycol (DEG) et/ou le di propylène glycol (DPG) et/ou le butylène glycol-1,3 et/ou le butane diol 1,4 et/ou le néopentyl glycol (NPG), ou
ii) jusqu'à 100%, de préférence jusqu'à 90% en moles, d'un polyol sélectionné parmi le DPG et/ou le DEG, qui est présent à un taux initial global molaire allant jusqu'à 50%, de préférence jusqu'à 40% du composant polyol dudit polyester initial et lequel composant polyol comprend en plus du PG, avec le composant acide dudit polyester initial étant l'anhydride maléique (AM) et/ou l'acide fumarique, et en option, en présence de jusqu'à 20% en moles d'anhydride phtalique (AP), et dans ce cas avec ledit anhydride phtalique initial étant également substitué par l'acide lactique jusqu'à 100%, de préférence à 100% en moles.

Le rapport molaire d'acide lactique par rapport au composant acide (sans inclure l'acide lactique) dudit polyester a) est de 0,4 à 1,75 et le polyester insaturé a) est le produit de réaction en une étape d'un mélange réactionnel comprenant lesdits composants acides et polyols après leur substitution par l'acide lactique comme définie au point i) ou ii).

De préférence, le rapport molaire d'acide lactique par rapport au polyol total, sans y compter l'acide lactique, varie de 0,4 à 1,75 et de préférence de 0,4 à 1,5 .

Comme exemples préférés de polyester a) selon les options i) ou ii), on peut citer les suivants :
- Selon l'option i), ledit polyester a) est le produit de réaction d'un mélange réactionnel en une étape, ledit mélange comprenant en moles AM:0,3-0,6 / AP: 0,1-0,4 / AL: 0,5-0,8 / PG : 0,5-0,8.
- Selon l'option ii), ledit polyester a) est le produit de réaction d'un mélange réactionnel en une étape, ledit mélange comprenant en moles : AM: 0,6-1,0 / AP: 0,0-0,2 / AL : 0,3-0,8 / PG: 0,4-0,7 / DPG : 0,0-0,4 / DEG: 0,0-0,3.

Le comonomère b) tel que défini ci-haut peut être au moins un monomère sélectionné parmi les :
b1) monomères vinyl aromatiques, de préférence le styrène et/ou les vinyl toluènes et/ou les di- or tri- vinyl benzènes, le α-méthyl styrène, plus préférentiellement le styrène et/ou
b2) les monomères (méth)acryliques, de préférence choisis parmi : le méthacrylate de méthyle (MAM), (méth)acrylate de butyle ((M)ABu), isobornyl (méth)acrylate (IBo(MA)), hydroxy éthyl (méth)acrylate (HE(M)A), hydroxy propyl (méth)acrylate (HP(M)A), tetrahydrofurfuryl (méth)acrylate (THF(M)A), butane diol-1,4 di(méth)acrylate (BDD(M)A), di éthylène glycol di(méth)acrylate (DEGD(M)A), dipropylène glycol di(méth)acrylate (DPGD(M)A), tripropylène glycol di(méth)acrylate (TPGD(M)A), butylène glycol-1,3 di(méth)acrylate (BGD(M)A), éthylène glycol di(méth)acrylate (EGD(M)A), hexane diol di(méth)acrylate (HDD(M)A), triméthylol propane tri(méth)acrylate (TMPT(M)A), pentaérythritol tetra(méth)acrylate, néopentyl glycol di(méth)acrylate (NPGD(M)A).
b3) les monomères allyliques en particulier les : diallyl phthalate (DAP), allyl glycidyl ether (AGE), allyl methacrylate (AMA)
et de préférence, le comonomère b) est le styrène.

Le taux de comonomère b) dans ladite résine, selon l'invention, peut varier de 25 à 55%, de préférence de 25 à 40% et plus préférentiellement de 25 à 35% en poids par rapport au poids total de a) + b) et inversement le taux de polyester insaturé a) de 45 à 75%, de préférence de 60 à 75% et plus préférentiellement de 65 à 75% en poids par rapport à a) + b).

Selon une première option, ledit polyester a) modifié à l'acide lactique est tel que défini selon le point i) ci-dessus. Selon une deuxième option, ledit polyester a) modifié à l'acide lactique est tel que défini selon le point ii) comme défini ci-dessus.

Dans le cas de la première option i), ledit composant polyol PG peut également être substitué par l'acide lactique à un taux molaire allant jusqu'à 40%, de préférence allant jusqu'à 30%. Selon un cas particulier de cette première option, l'acide lactique peut substituer de 25 à 80% et de préférence de 25 à 60% en moles dudit anhydride phtalique (AP). Toujours selon cette option i) comme défini ci-haut, ledit composant polyol dudit polyester initial peut, selon un cas plus particulier, comprendre de 50 à 100% en moles de PG, de préférence 100% en moles de PG et de 0 à 50% d'un polyol supplémentaire sélectionné parmi : l'éthylène glycol (EG) et/ou le di éthylène glycol (DEG) et /ou le di propylène glycol (DPG) et/ou le butylène glycol-1,3 et/ou le butane diol 1,4 et/ou le néopentyl glycol (NPG). Selon un cas particulier préféré de cette option i), ledit composant polyol dudit polyester initial est à 100% en moles (ou composé à 100%) de PG.

Dans le cas où le polyester a) est défini selon l'option ii) comme définie ci-dessus, toujours selon un cas plus particulier, l'acide lactique peut substituer jusqu'à 100%, de préférence de 50 à 100% et plus préférentiellement de 75 à 100% en moles dudit polyol initial sélectionné parmi le DEG et/ou le DPG. Selon un autre mode préféré de cette option ii), seulement le DPG (parmi DEG et DPG) est présent comme polyol initial et jusqu'à 50%, de préférence jusqu'à 40% en moles dudit composant polyol dudit polyester initial et en plus du PG, avec ledit DPG étant substitué à 100% en moles par l'acide lactique. Toujours selon l'option ii) et un cas encore plus particulier, en plus de l'anhydride maléique et/ou de l'acide fumarique, jusqu'à 20% en moles d'anhydride phtalique est présent dans le composant acide du polyester initial et ledit anhydride phtalique est également substitué par l'acide lactique à 100%. Selon un cas préféré de cette option ii), ledit composant acide dudit polyester initial est à 100% composé d'anhydride maléique et/ou d'acide fumarique. Selon un autre mode particulier de cette option ii), le DPG et le DEG sont tous deux présents comme polyols initiaux dans le polyester initial, avec un rapport molaire initial DEG/DPG allant de 1/2 à 2/1 et tous deux étant substitués par l'acide lactique à 100%, et avec l'anhydride maléique initial étant également substitué jusqu'à 25% en moles par l'acide lactique.

Selon un mode plus particulier de l'option ii) de la résine selon l'invention, l'acide lactique substitue en plus (des polyols DEG/DPG), jusqu'à 40% en moles d'anhydride maléique du polyester initial.

Le deuxième objet de l'invention concerne une composition thermodurcissable qui comprend au moins une résine telle que définie ci-dessus selon l'invention. Cette composition thermodurcissable peut être une composition réticulable par peroxyde, soit à haute température, ce qui signifie une température supérieure à 90°C, soit à température ambiante, ce qui signifie ici une température allant de 15 à 35°C ou à température moyenne ce qui signifie une température supérieure à 35 et jusqu'à 90°C et en présence d'un accélérateur ou qu'il s'agit d'une composition réticulable sous rayonnement.

Selon une première possibilité, la composition thermodurcissable selon l'invention comprend une résine de l'invention telle que définie selon l'option i) ci-dessus. Plus particulièrement selon cette option i) du choix de la résine, cette composition thermodurcissable est une composition transformable à température ambiante ou à moyenne température, de préférence une composition, pouvant être chargée ou non chargée, pour usage général et couramment appelée « général purpose » et plus préférentiellement elle est une composition transformable ou pour utilisation dans une composition transformable à température ambiante ou à moyenne température, pour revêtements, adhésifs, polymère béton, mastics ou une composition dédiée à l'injection RTM, à la projection et à la stratification manuelle.

Selon une deuxième possibilité, ladite composition thermodurcissable de l'invention comprend au moins une résine selon l'invention telle que définie selon l'option ii) décrite ci-dessus. Plus particulièrement dans ce cas, elle est une composition de moulage et, de préférence, une composition de moulage à haute température et, de préférence particulière, une composition pour SMC, BMC ou pour pultrusion ou pour utilisation dans cette application.

L'invention couvre également l'utilisation d'une résine selon l'invention telle que définie ci-haut, comme un liant dans une composition thermodurcissable telle que décrite ci-dessus et en fonction du choix de la résine de l'invention selon l'option i) ou ii) décrite ci-haut.

Ainsi, si le choix de la résine de l'invention est selon l'option i), dans ce cas, l'utilisation particulière comme liant est dans des compositions à usage général, autrement dites « général purpose », qui sont transformables à température ambiante ou à moyenne température, compositions chargées ou non-chargées et de préférence pour revêtements, adhésifs, polymère béton, mastics ou compositions dédiées à l'injection RTM, à la projection et à la stratification manuelle.

Dans le cas du choix de résine de l'invention selon l'option ii), l'utilisation particulière comme liant est dans des compositions de moulage et de préférence pour des compositions de moulage à haute température et plus préférentiellement pour SMC, BMC et pour pultrusion.

Les compositions thermodurcissables comprenant la résine, selon l'invention, peuvent être utilisées dans des compositions réticulables par peroxyde ou dans des compositions réticulables par rayonnement. Comme exemple de rayonnement, on peut citer le rayonnement UV ou le faisceau d'électrons.

L'invention concerne aussi un procédé de préparation d'une résine telle que définie selon l'invention, lequel procédé comprend la substitution par l'acide lactique, dans la composition d'un polyester insaturé initial, de :
i) jusqu'à 90%, de préférence jusqu'à 80% et plus préférentiellement jusqu'à 60% en moles de l'anhydride phtalique du composant acide dudit polyester initial, dont le composant acide comprend en moles de 20 à 80%, de préférence de 30 à 70% d'anhydride maléique (AM) et/ou d'acide fumarique, et de 80 à 20%, de préférence de 70 à 30% d'anhydride phtalique (AP), et dont le composant polyol comprend en moles de 50 à 100% de propylène glycol (PG), de préférence 100% de PG, et de 0 à 50% d'un polyol supplémentaire sélectionné parmi l'éthylène glycol (EG) et/ou le di éthylène glycol (DEG) et/ou le di propylène glycol (DPG) et/ou le butylène glycol-1,3 et/ou le butane diol 1,4 et/ou le (néopentyl glycol (NPG)), ou
ii) jusqu'à 100%, de préférence jusqu'à 90% en moles d'un polyol sélectionné parmi le DPG et/ou le DEG, qui est présent à un taux initial global molaire allant jusqu'à 50%, de préférence jusqu'à 40% du composant polyol dudit polyester initial et lequel composant polyol comprend en plus du PG, avec le composant acide dudit polyester initial étant l'anhydride maléique (AM) et/ou l'acide fumarique, et en option en présence de jusqu'à 20% en moles d'anhydride phtalique (AP), et dans ce cas avec ledit anhydride phtalique initial étant également substitué par l'acide lactique jusqu'à 100%, de préférence à 100% en moles;
   en ce que le rapport molaire d'acide lactique par rapport au composant acide, sans inclure l'acide lactique, dudit polyester a) est de 0,4 à 1,75 ;
   en ce que ledit polyester insaturé a) est le produit de réaction en une étape d'un mélange réactionnel comprenant lesdits composants acides et polyols après leur substitution par l'acide lactique comme définie au point i) ou ii).

Sur le reste, la préparation de la résine est comme pour une résine polyester classique, avec une préparation bien connue par l'homme du métier, à l'exception d'une durée de réaction un peu plus longue qui peut être réduite par l'utilisation d'un catalyseur connu de polycondensation comme les sels métalliques et, en particulier, les sels organiques d'étain ou de titane. La présence d'acide lactique en substitution de composant anhydride ou acide et/ou de composant polyol permet un meilleur contrôle de la structure de la résine polyester insaturé par la réduction ou élimination des réactions d'addition de glycol sur les insaturations du polyester insaturé et la réduction ou l'élimination de la perte de glycol dans les eaux de condensation (eaux usées) du fait de l'absence ou de la réduction du besoin d'augmenter le taux de glycol pour ajuster la stoechiométrie des fonctions acide-alcool. Non seulement, il y a meilleur contrôle de stoechiométrie et de structure et, par conséquent, des performances finales (mécaniques) de la résine mais également moins de besoin de traitement des eaux usées.

Finalement, l'invention concerne également les produits finaux réticulés, lesquels résultent de la réticulation d'au moins une résine telle que définie selon l'invention ou d'au moins une composition thermodurcissable telle que définie selon l'invention décrite ci-dessus.

Parmi ces produits, on peut citer comme exemples les suivants :
- pièces moulées SMC pour automobile, camion ou pour appareils ménagers ou d'équipements ferroviaires, électriques ou électrotechniques pour résines selon option ii), comme définie ci-haut
- marbre artificiel pour résines selon option i) comme définie ci-haut
- panneaux intérieurs de décoration pour résines selon option ii)
- panneaux extérieurs avec protection gel coat et/ou peinture : énergie, transport, bâtiment, décoration pour résines selon option i)
- produits pour application sanitaire : pour back up des baignoires, béton sanitaire avec gel coat ou ABS en couche de protection pour résines selon option i)
- profilés pultrudés pour la réalisation d'équipements pour le bâtiment, ou pour des applications ferroviaires, électriques ou électrotechniques, par exemple pour utilisations intérieures comme le chemin des câble pour résines selon option ii).

Plus particulièrement, ces produits finaux sont des produits pour usage général dits « général purpose », et ils résultent de la réticulation d'au moins une résine telle que définie selon l'option i) décrite ci-haut ou ils résultent de la réticulation d'une composition thermodurcissable la contenant. Plus particulièrement, ils sont des revêtements, des adhésifs, des mastics, du béton polymère ou des stratifiés ou des produits d'injection RTM ou de projection.

Selon un autre cas particulier, lesdits produits finaux selon l'invention résultent de la réticulation d'au moins une résine selon l'invention telle que définie selon l'option ii) décrite ci-haut, ou de la réticulation d'une composition thermodurcissable la contenant et sont des pièces moulées, par injection, compression, ou par pultrusion.

### PARTIE EXPERIMENTALE

### 1) Matières premières utilisées et références

**Tableau 1 : matières premières**

| Nom | Abréviation utilisée | Origine (fournisseur) | Nom chimique | Fonction | Pureté (%) |
|---|---|---|---|---|---|
| PURAC^{R}88 T (acide lactique) | AL | PURAC | Acide -(L)-lactique en solution aqueuse | Modifiant du polyester a) | 88 |
| Anhydride. Maléique | AM | Lonza | Anh. Maléique | Composant acide | >99,7 |
| Anhydride. Phtalique | AP | Lanxess | Anh. Phtalique | Composant acide | > 99,8 |
| Propylène glycol | PG | Helm AG | Propylène glycol | Composant alcool | > 99,5 |
| Diéthylène glycol | DEG | Helm AG | Diéthylène glycol | Composant alcool | > 99,5 |
| Dipropylène glycol | DPG | Bayer | Dipropylène glycol | Composant alcool | > 99,7 |
| Styrène | St | Total Petro Chemicals | Styrène | Comonomère b) | >99,7 |
| Accelerator NL-49 P (Co 1%) | Co 1% | AKZO Nobel | Solution de Solution de sel de 2-ethylhexanoate de cobalt à 1 % dans un ester aliphatique | Accélérateur de décomposition des peroxydes | Solution |
| Butanox ® M50 | PMEC | AKZO Nobel | Peroxyde de méthyléthylcétone en solution dans diméthylphtalate Oxygène actif : 8,8-9,0% | Amorceur de polymérisation radicalaire / peroxyde | Solution |

### 2) Préparation des résines modifiées à l'acide lactique et des résines standard de référence

### 2.1) Mode opératoire général

Le mélange réactionnel est chargé dans le réacteur agité puis chauffé grâce à un chauffe ballon à une température palier (180-220°C) avec une régulation de température et avec maintien sous atmosphère inerte d'azote tout au long de la réaction. L'eau formée par la réaction s'évapore et se condense dans un réfrigérant, elle est ensuite récupérée dans une recette et mesurée au fil du temps pour une première information du degré de conversion obtenu de la polycondensation.

Les critères d'arrêt et de suivi de la réaction sont l'indice d'acide et d'hydroxyle et la viscosité mesurés sur des prélèvements réalisés au cours du temps. La viscosité de la résine est suivie selon la méthode de la chute de bille : l'échantillon est placé dans un tube, plongé dans un bain thermostaté et on mesure le temps mis par une bille pour parcourir une distance donnée. Plus une résine sera condensée, plus le temps de chute de la bille sera grand : avec l'avancement de la polycondensation, il y a augmentation de la masse molaire et donc de la viscosité du polymère ainsi mesurée.

Lorsque les critères d'arrêt sont atteints, le polyester insaturé (a) est refroidi, à une température suffisante pour que sa viscosité permette sa dilution dans le comonomère, puis on dilue le polyester ainsi refroidi dans un comonomère (b) : ici le styrène pour obtenir une résine aisément utilisable en termes de viscosité. On ajoute préalablement, dans le réacteur, des additifs et/ou des inhibiteurs de polymérisation qui empêcheront la polymérisation (réticulation) de la résine, même en absence de catalyseur (amorceur).

### 2.2) Compositions des résines (voir Tableau 2)

**Tableau 2 : Composants acides et polyols et acide lactique des résines testées**

| | Polyester insaturé a) | | | | | | | | | | Comonomère b) |
|---|---|---|---|---|---|---|---|---|---|---|---|
| REF | AM (mol) | AP (mol) | PG (mol) | DEG (mol) | DPG (mol) | AL (mol) | OH/ CO₂H | Composant substitué et % | % mol AL/composant acide (hors AL) | % AL/ résine (poids) | % poids styrène dans a) + b) |
| Comparatif 1 | 0,35 | 0,65 | 1,07 | 0 | 0 | 0 | 1,07 | 0 | 0 | 0 | 33 |
| Comparatif 2 | 1,0 | 0 | 0,67 | 0 | 0,38 | 0 | 1,05 | 0 | 0 | 0 | 33 |
| Comparatif 3 | 0,82 | 0,18 | 0,68 | 0,20 | 0,15 | 0 | 1,03 | 0 | 0 | 0 | 32,7 |
| 1 | 0,35 | 0,325 | 0,745 | 0 | 0 | 0,65 | 1,07 | AP=50 | 96 | 58,3 | 34,3 |
| | | | | | | | | PG=30,4 | | | |
| 2 | 0,62 | 0 | 0,67 | 0 | 0 | 0,76 | 1,00 | DPG=100 | 123 | 66,3 | 32,7 |
| | | | | | | | | AM=38 | | | |
| 3 | 0,82 | 0 | 0,665 | 0,185 | 0 | 0,36 | 1,03 | AP=100 | 44 | 44,1 | 35,6 |
| | | | | | | | | DPG=100 | | | |
| | | | | | | | | DEG=7,5 | | | |
| | | | | | | | | PG=2,2 | | | |
| 4 | 0,65 | 0 | 0,68 | 0 | 0 | 0,70 | 1,03 | AP=100 | 108 | 64,3 | 33,9 |
| | | | | | | | | DPG=100 | | | |
| | | | | | | | | DEG=100 | | | |
| | | | | | | | | AM=20,7 | | | |

### 3) Caractérisation physico-chimique des résines préparées : méthodes et résultats

### 3.1) Méthodes

### 3.1.1) Distribution moléculaire Mn/Mw

Les distributions moléculaires sont évaluées par chromatographie par exclusion stérique à l'aide de colonnes Waters Ultrastyragel HR de 10 000 A à 50 Å et d'un détecteur par réfractométrie différentielle avec le THF comme éluant et un étalonnage au polystyrène.

### 3.1.2) Viscosité

La viscosité est mesurée au viscosimètre Brookfield à 25°C à 50 RPM (Rotation par minute). Les résultats de viscosité présentés au tableau 3 sont en dPa.s.

### 3.1.3) Ordelt

La réaction secondaire d'Ordelt est une addition de type Michael, du glycol à la double liaison de l'acide insaturé.

Le taux de cette réaction est mesuré par analyse RMN (Makromol. Chem. 1984 ; 185, 2583), en suivant les pics caractéristiques des spectres hydrogène (¹H) et carbone (¹³C). Ce taux correspond aux % de doubles liaisons saturées par cette réaction d'addition.

### 3.1.4) Indices d'acide et OH

Ces indices sont exprimés en mg de KOH par g de polyester a) sec (sans diluant) et sont mesurés selon la norme ISO 2114:2000 pour l'indice d'acide et selon la norme ISO 2554:1997 pour l'indice d'hydroxyle (OH).

### 3.1.5) Réactivité (temps de gel)

### 3.1.5.1) Résines utilisées à température ambiante ou à moyenne température (réf exemples : exemple 1 et comparatif 1)

Dans un bêcher en polypropylène, on verse 100 g de la résine que l'on place dans un bain thermostaté à 25°C. Ensuite, on y ajoute 1,5% d'accélérateur (Akzo ^{R} NL49P) et 1,2% de « catalyseur » ou amorceur de polymérisation radicalaire (Akzo Butanox ^{R} M50), on démarre le chronomètre, on agite et, à l'aide d'une spatule en bois, on détermine le temps au bout duquel le gel commence.

### 3.1.5.2) Résines utilisées à haute température (réf exemples : 2-4 et comparatifs 2-3)

Le temps de gel est mesuré selon la norme ISO 14848:1998.

### 3.2) Résultats

**Tableau 3 : Caractéristiques physico-chimiques des résines préparées**

| REF | Mn/Mw | I_{A} | I_{OH} | % Styrène | Viscosité dPa.s | Ordelt (%) | Réactivité (temps gel) à 25°C (s) | Réactivité temps gel ISO 14848 (s) |
|---|---|---|---|---|---|---|---|---|
| Comparatif 1 | 1200/5520 | 29,8 | 37,4 | 33,0 | 4,8 | 21,8 | 660 | |
| Comparatif 2 | 2657/13037 | 22,3 | 30,7 | 33,0 | 14,2 | 8,4 | - | 56 |
| Comparatif 3 | 2235/9170 | 23,6 | 36,5 | 32,7 | 11,1 | 12,6 | - | 101 |
| 1 | 1493/3568 | 29,0 | 42,6 | 34,3 | 4,4 | 4,4 | 515 | - |
| 2 | 2308/22958 | 19,4 | 49,4 | 32,7 | 11,6 | 9,0 | - | <10 |
| 3 | 1886/15740 | 21,6 | 44,8 | 35,6 | 8,2 | 8,6 | - | 92 |
| 4 | 1940/6560 | 20,3 | 44,2 | 33,9 | 6,8 | 7,8 | - | 113 |

### 4) Tests de performances particulières des résines préparées

### 4.1) Méthodes

### 4.1.1) Glycol dans les eaux de condensation

Cette méthode couvre la détermination de volatils, dioxanes, dioxolanes et des glycols dans les distillats aqueux de la réaction d'estérification en utilisant la technique de la chromatographie gazeuse avec la méthode de l'étalon interne.

### 4.1.2) Mouillage des fibres

Pour ce test comparatif, on utilise de la fibre de verre poudre 450g/m², on en découpe un carré d'environ 20 cm² et on dépose au centre 20 g de résine non catalysée (sans amorceur). L'étalement est mesuré au bout de 24 h : plus celui-ci est grand moins la résine est entrée dans les fibres de verre donc moins elle mouille ces fibres. Pour ce test, il est important que les résines comparées aient sensiblement la même viscosité (pour cela on ajuste la dilution si nécessaire).

### 4.1.3) Traction

Les éprouvettes sont découpées dans une plaque de résine moulée et réticulée entre deux plaques de verre. Le système catalytique employé se compose de 1,5% d'accélérateur (Akzo^{R} NL49P) et 1,2% de «catalyseur» ou amorceur de polymérisation radicalaire (Akzo Butanox^{R} M50). Les plaques ainsi obtenues sont recuites 16 heures à 80°C et 2 heures à 120°C. Les éprouvettes sont évaluées en traction selon la norme ISO 527-1:1993.

### 4.1.4) Flexion

Eprouvettes testées : mêmes conditions qu'au point 4.1.3). Les éprouvettes ainsi préparées sont évaluées en flexion selon la norme ISO 178:2003.

### 4.1.5) HDT

Les éprouvettes sont préparées comme au point 4.1.3). La HDT est mesurée selon la norme ISO 75-2:1999 méthode Ae.

### 4.2) Résultats (voir tableau 4 ci-dessous)

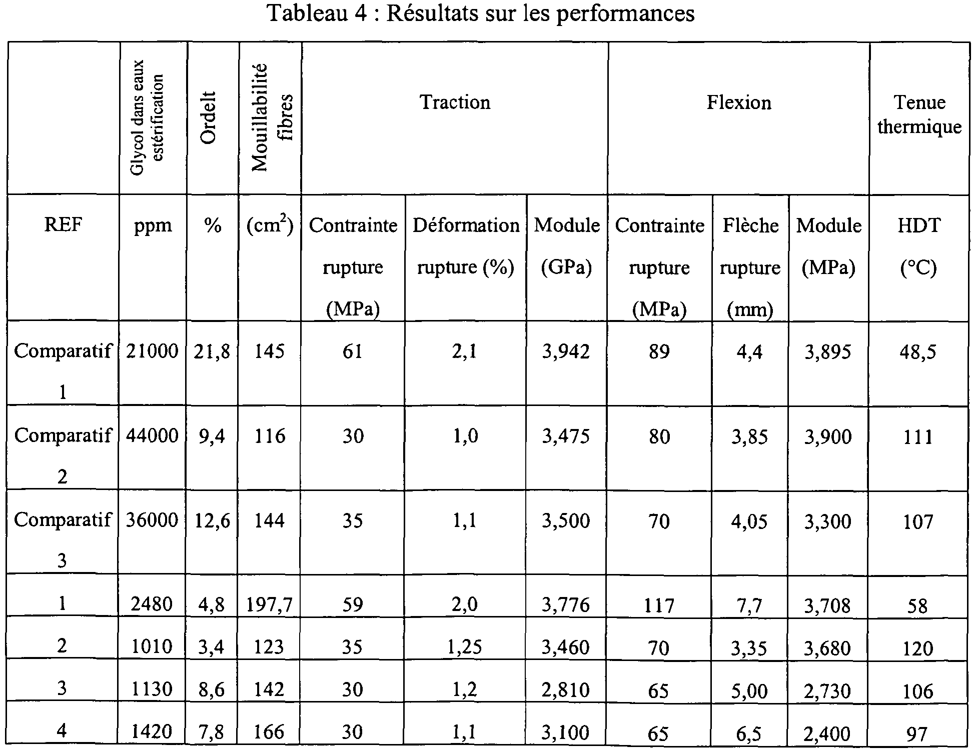

## Revendications

1. Résine de polyester insaturé comprenant : a) au moins un polyester insaturé et b) au moins un comonomère copolymérisable avec ledit polyester, **caractérisée en ce que**, ledit polyester a) est un polyester insaturé modifié par l'acide lactique en substitution dans la composition d'un polyester initial de :
i) jusqu'à 90% en moles de l'anhydride phtalique du composant acide dudit polyester initial dont le composant acide comprend en moles de 20 à 80% d'anhydride maléique (AM) et/ou d'acide fumarique, et de 80 à 20% d'anhydride phtalique (AP), et dont le composant polyol comprend en moles de 50 à 100% de propylène glycol (PG) et de 0 à 50% d'un polyol supplémentaire sélectionné parmi l'éthylène glycol (EG) et/ou le di éthylène glycol (DEG) et/ou le di propylène glycol (DPG) et/ou le butylène glycol-1,3 et/ou le butane diol 1,4 et/ou le néopentyl glycol (NPG), ou
ii) jusqu'à 100% en moles d'un polyol sélectionné parmi le DPG et/ou le DEG, qui est présent à un taux initial global molaire allant jusqu'à 50% du composant polyol dudit polyester initial et lequel composant polyol comprend en plus du PG, avec le composant acide dudit polyester initial étant l'anhydride maléique (AM) et/ou l'acide fumarique,
**en ce que** le rapport molaire d'acide lactique par rapport au composant acide, sans inclure l'acide lactique, dudit polyester a) est de 0,4 à 1,75 ;
et **en ce que** ledit polyester insaturé a) est le produit de réaction en une étape d'un mélange réactionnel comprenant lesdits composants acides et polyols après leur substitution par l'acide lactique comme définie au point i) ou ii).

2. Résine selon la revendication 1, **caractérisée en ce que** ledit comonomère b) est au moins un monomère sélectionné parmi les :
b1) monomères vinyl aromatiques, de préférence le styrène et/ou les vinyl toluènes et/ou les di- or tri- vinyl benzènes, le α-méthyl styrène, plus préférentiellement le styrène et/ou
b2) les monomères (méth)acryliques, de préférence choisis parmi : le méthacrylate de méthyle (MAM), (méth)acrylate de butyle ((M)ABu), isobornyl (méth)acrylate (IBo(MA), hydroxy éthyl (méth)acrylate (HE(M)A), hydroxy propyl (méth)acrylate (HP(M)A), tetrahydrofurfuryl (méth)acrylate (THF(M)A), butane diol-1,4 di(méth)acrylate (BDD(M)A), di éthylène glycol di(méth)acrylate (DEGD(M)A), dipropylène glycol di(méth)acrylate (DPGD(M)A), tripropylène glycol di(méth)acrylate (TPGD(M)A), butylène glycol-1,3 di(méth)acrylate (BGD(M)A), éthylène glycol di(méth)acrylate (EGD(M)A), hexane diol di(méth)acrylate (HDD(M)A), triméthylol propane tri(méth)acrylate (TMPT(M)A), pentaérythritol tetra(méth)acrylate, néopentyl glycol di(méth)acrylate (NPGD(M)A).
b3) les monomères allyliques en particulier les : diallyl phthalate (DAP), allyl glycidyl ether (AGE), allyl methacrylate (AMA),
et de préférence le comonomère b) est le styrène.

3. Résine selon l'une quelconque des revendications 1 à 2, **caractérisée en ce que** ledit polyester a) modifié à l'acide lactique est tel que défini selon le point i) de la revendication 1 et **en ce que**:
- ledit composant polyol PG est substitué par l'acide lactique à un taux molaire allant jusqu'à 40%, de préférence allant jusqu'à 30% ; et/ou
- l'acide lactique substitue de 25 à 80%, de préférence de 25 à 60% en moles dudit anhydride phtalique (AP).

4. Résine selon l'une quelconque des revendications 1 à 2, **caractérisée en ce que** ledit polyester a) modifié à l'acide lactique est tel que défini selon le point ii) de la revendication 1 et **en ce que** :
- seul le DPG est présent comme polyol initial parmi DEG et DPG et ceci jusqu'à 50%, de préférence 40% en moles dudit composant polyol dudit polyester initial et ceci en plus du PG, avec ledit DPG étant substitué à 100% en moles par l'acide lactique ; ou
- le DPG et le DEG sont tous deux présents comme polyols initiaux dans le polyester initial, avec un rapport molaire initial DEG/DPG allant de 1/2 à 2/1 et **en ce que** tous deux sont substitués par l'acide lactique à 100%, et **en ce que** l'anhydride maléique initial est également substitué jusqu'à 25% en moles par l'acide lactique.

5. Résine selon la revendication 4 **caractérisée en ce qu'**en plus de l'anhydride maléique et/ou de l'acide fumarique, jusqu'à 20% en moles d'anhydride phtalique est présent dans le composant acide du polyester initial et **en ce qu'**il est également substitué à 100% par l'acide lactique.

6. Résine selon la revendication 4 **caractérisée en ce que** ledit composant acide dudit polyester initial est à 100% composé d'anhydride maléique et/ou d'acide fumarique ; de préférence, l'acide lactique substitue en plus jusqu'à 40% en moles d'anhydride maléique du polyester initial.

7. Composition thermodurcissable, **caractérisée en ce qu'**elle comprend au moins une résine telle que définie selon l'une quelconque des revendications 1 à 6, de préférence il s'agit d'une composition réticulable par peroxyde, soit à haute température à savoir à une température supérieure à 90 °C, soit à température ambiante à savoir entre 15 et 35 °C ou à température moyenne à savoir à une température supérieure à 35°C et pouvant aller jusqu'à 90°C et en présence d'un accélérateur ou qu'il s'agit d'une composition réticulable sous rayonnement.

8. Composition selon la revendication 7, **caractérisée en ce que** ladite résine est telle que définie selon la revendication 3, et **en ce qu'**il s'agit d'une composition transformable à température ambiante, à savoir entre 15 et 35 °C, ou à moyenne température, à savoir à une température supérieure à 35°C et pouvant aller jusqu'à 90°C ; de préférence il s'agit d'une composition chargée ou non chargée pour usage général.

9. Composition selon la revendication 8, **caractérisée en ce qu'**il s'agit d'une composition pour revêtements, adhésifs, polymère béton, mastics ou dédiée à l'injection RTM, à la projection et à la stratification manuelle.

10. Composition selon la revendication 7, **caractérisée en ce que** ladite résine est telle que définie selon l'une quelconque des revendications 4 à 6, et **en ce qu'**il s'agit d'une composition de moulage à haute température, à savoir à une température supérieure à 90 °C, de préférence d'une composition de moulage à haute température pour SMC, BMC, pultrusion.

11. Utilisation d'une résine telle que définie selon l'une quelconque des revendications 1 à 6, **caractérisée en ce qu'**elle est utilisée comme liant dans une composition thermodurcissable telle que définie selon l'une quelconque des revendications 7 à 10 ; de préférence ladite résine est telle que définie
- selon la revendication 3, et ladite utilisation est dans des compositions transformables à température ambiante ou à moyenne température, de préférence pour compositions chargées ou non-chargées pour revêtements, adhésifs, polymère béton, mastics, ou dédiées à l'injection RTM, la projection et à la stratification manuelle ; ou
- selon l'une quelconque des revendications 4 à 6, pour l'utilisation dans des compositions de moulage, de préférence pour compositions de moulage à haute température et plus préférentiellement pour SMC, BMC, pultrusion.

12. Utilisation d'une composition thermodurcissable telle que définie
- selon la revendication 7, **caractérisée en ce qu'**il s'agit d'une utilisation dans des compositions réticulables par peroxyde ou par rayonnement ; ou
- selon la revendication 8, **caractérisée en ce qu'**il s'agit d'une utilisation dans des compositions transformables à température ambiante à savoir entre 15 et 35 °C, ou à moyenne température à savoir à une température supérieure à 35°C et pouvant aller jusqu'à 90°C, de préférence pour des compositions chargées ou non-chargées pour usage général ; ou
- selon la revendication 9, **caractérisée en ce qu'**il s'agit d'une utilisation pour revêtements, adhésifs, polymère béton, mastics ou dédiée à l'injection RTM, à la projection et à la stratification manuelle, ou
- selon la revendication 10, **caractérisée en ce qu'**il s'agit d'une utilisation pour SMC, BMC, pultrusion.

13. Procédé de préparation d'une résine telle que définie selon l'une quelconque des revendications 1 à 6, **caractérisé en ce qu'**il comprend la substitution par l'acide lactique dans la composition d'un polyester insaturé initial, de :
i) jusqu'à 90% en moles de l'anhydride phtalique du composant acide dudit polyester initial dont le composant acide comprend en moles de 20 à 80% d'anhydride maléique (AM) et/ou d'acide fumarique, et de 80 à 20% d'anhydride phtalique (AP), et dont le composant polyol comprend en moles de 50 à 100% de propylène glycol (PG), et de 0 à 50% d'un polyol supplémentaire sélectionné parmi l'éthylène glycol (EG) et/ou le di éthylène glycol (DEG) et/ou le di propylène glycol (DPG) et/ou le butylène glycol-1,3 et/ou le butane diol 1,4 et/ou le néopentyl glycol (NPG), ou
ii) jusqu'à 100% en moles d'un polyol sélectionné parmi le DPG et/ou le DEG, qui est présent à un taux global molaire initial allant jusqu'à 50% du composant polyol dudit polyester initial et lequel composant polyol comprend en plus du PG, avec le composant acide dudit polyester initial étant l'anhydride maléique (AM) et/ou l'acide fumarique ;
**en ce que** le rapport molaire d'acide lactique par rapport au composant acide, sans inclure l'acide lactique, dudit polyester a) est de 0,4 à 1,75 ;
et **en ce que** ledit polyester insaturé a) est le produit de réaction en une étape d'un mélange réactionnel comprenant lesdits composants acides et polyols après leur substitution par l'acide lactique comme définie au point i) ou ii).

14. Produits finaux réticulés, **caractérisés en ce qu'**ils résultent de la réticulation d'au moins une résine telle que définie selon l'une quelconque des revendications 1 à 6 ou d'une composition thermodurcissable telle que définie selon l'une quelconque des revendications 7 à 10.

15. Produits finaux selon la revendication 14, **caractérisés en ce que** :
- ils sont pour usage général, et **en ce qu'**ils résultent de la réticulation d'au moins une résine telle que définie selon la revendication 3 ou de la réticulation d'une composition telle que définie selon la revendication 8 ou 9, de préférence lesdits produits finaux sont des revêtements des adhésifs, des mastics, du béton polymère ou des stratifiés ou des produits d'injection RTM ou de projection ; ou
- il s'agit de pièces moulées en particulier par injection, compression, ou pultrusion et **en ce qu'**ils résultent de la réticulation d'au moins une résine telle que définie selon l'une quelconque des revendications 4 à 6, ou de la réticulation d'une composition telle que définie selon la revendication 10.

## Patentansprüche

1. Ungesättigtes Polyesterharz, das umfasst: a) mindestens einen ungesättigten Polyester und b) mindestens ein mit dem Polyester copolymerisierbares Comonomer, **dadurch gekennzeichnet, dass** der Polyester a) ein ungesättigtes, durch die Milchsäure in Substitution in der Zusammensetzung eines Ausgangspolyesters modifizierter Polyester ist von:
i) bis zu 90 Mol-% Phthalsäureanhydrid der sauren Komponente des Ausgangspolyesters, wobei die saure Komponente, in Mol, 20 bis 80 %, Maleinsäureanhydrid (AM) und/oder Fumarsäure umfasst, und 80 bis 20 % Phthalsäureanhydrid (AP), und wobei die Polyolkomponente, in Mol, 50 bis 100 % Propylenglykol (PG) und 0 bis 50 % eines zusätzlichen Polyols umfasst, das aus dem Ethylenglykol (EG) und/oder dem Diethylenglykol (DEG) und/oder dem Dipropylenglykol (DPG) und/oder dem 1,3-Butylenglycol und/oder dem 1,4-Butandiol und/oder dem Neopentylglykol (NPG) ausgewählt ist, oder
ii) bis zu 100 Mol-% eines Polyols, das aus dem DPG und/oder dem DEG ausgewählt ist, das in einer allgemeinen molaren Ausgangsrate von bis zu 50 % der Polyolkomponente des Ausgangspolyesters vorhanden ist und dessen Polyolkomponente zusätzlich PG umfasst, mit der sauren Komponente des Ausgangspolyesters, die das Maleinsäureanhydrid (AM) oder die Fumarsäure ist,
dass das molare Verhältnis der Milchsäure zur sauren Komponente, ohne Einschluss der Milchsäure, des Polyesters a) 0,4 bis 1,75 beträgt,
und dass der ungesättigte Polyester a) das Reaktionsprodukt in einem Schritt eines Reaktionsgemischs ist, das die sauren Komponenten und Polyole nach ihrer Substitution durch die Milchsäure umfasst, wie in Punkt i) oder ii) definiert.

2. Harz nach Anspruch 1, **dadurch gekennzeichnet, dass** das Comonomer b) mindestens ein Monomer ist, das ausgewählt ist aus:
b1) den aromatischen Vinylmonomeren, vorzugsweise dem Styrol und/oder den Vinyltuluolen und/oder den Di- oder Trivinylbenzolen, dem α-Methylstyrol, vorzugsweise dem Styrol, und/oder
b2) den (Meth)acrylmonomeren, vorzugsweise ausgewählt aus: dem Methylmethacrylat (MMA), Butyl(meth)acrylat ((M)ABu), Isobornyl(meth)acrylat (IBo(MA), Hydroxyethyl(meth)acrylat (HE(M)A), Hydroxypropyl(meth)acrylat (HP(M)A), Tetrahydrofurfuryl(meth)acrylat (THF(M)A), Butandiol-1,4-di(meth)acrylat (BDD(M)A), Diethylenglycoldi(meth)acrylat (DEGD(M)A), Dipropylenglycoldi(meth)acrylat (DPGD(M)A), Tripropylenglycoldi(meth)acrylat (TPGD(M)A), Butylenglycol-1,3-di(meth)acrylat (BGD(M)A), Ethylnglycoldi(meth)acrylat (EGD(M)A), Hexandioldi(meth)acrylat (HDD(M)A), Trimethylolpropantri(meth)acrylat (TMPT(M)A), Pentaerythritoltetra(meth)acrylat, Neopentylglycoldi(meth)acrylat (NPGD(M)A),
b3) den Allylmonomere, insbesondere dem: Diallylphthalat (DAP), Allylglycidylether (AGE), Allylmethacrylat (AMA),
und das Comonomer b) vorzugsweise das Styrol ist.

3. Harz nach einem der Ansprüche 1 bis 2, **dadurch gekennzeichnet, dass** der mit Milchsäure modifizierte Polyester a) wie in Punkt i) von Anspruch 1 definiert ist und dass:
- die Polyol-Komponente PG durch die Milchsäure in einem molaren Verhältnis von bis zu 40 %, vorzugsweise von bis zu 30 %, substituiert wird,
- die Milchsäure 25 bis 80 % und vorzugsweise 25 bis 60 %, in Mol, des Phthalsäureanhydrid (AP) substituiert.

4. Harz nach einem der Ansprüche 1 bis 2, **dadurch gekennzeichnet, dass** der mit Milchsäure modifizierte Polyester a) wie in Punkt ii) von Anspruch 1 definiert ist und dass:
- von DEG und DPG nur das DPG als Ausgangspolyol vorhanden ist und das bis 50 %, vorzugsweise 40 %, in Mol, der Polyolkomponente des Ausgangspolyesters, und das zusätzlich zu dem PG, mit dem DPG, das zu 100 Mol-% durch die Milchsäure substituiert wird, oder
- das DPG und das DEG beide als Ausgangspolyole im Ausgangspolyester vorhanden sind, mit einem molaren Ausgangsverhältnis DEG/DPG von ½ zu 2/1 und dass alle beide zu 100 % durch die Milchsäure substituiert sind, und dass das Ausgangs-Phthalsäureanhydrid ebenfalls bis zu 25 Mol-% durch die die Milchsäure substituiert wird.

5. Harz nach Anspruch 4, **dadurch gekennzeichnet, dass** neben dem Phthalsäureanhydrid und/oder der Fumarsäure bis zu 20 Mol-% Phthalsäureanhydrid in der sauren Komponente des Ausgangspolyesters vorhanden sind und dass es ebenfalls zu 100 % durch die Milchsäure substituiert wird.

6. Harz nach Anspruch 4, **dadurch gekennzeichnet, dass** die saure Komponente des Ausgangspolyesters zu 100 % Maleinsäureanhydrid- und/oder Fumarsäureverbindung ist, wobei die Milchsäure vorzugsweise zusätzlich bis zu 40 Mol-% Maleinsäureanhydrid des Ausgangspolyesters substituiert.

7. Wärmehärtbare Zusammensetzung, **dadurch gekennzeichnet, dass** sie mindestens ein Harz nach einem der Ansprüche 1 bis 6 umfasst, wobei es sich vorzugsweise um eine durch Peroxid vernetzbare Zusammensetzung handelt, entweder bei hoher Temperatur, nämlich bei einer Temperatur über 90 °C, oder bei Raumtemperatur, nämlich zwischen 15 und 35 °C oder bei mittlerer Temperatur, nämlich bei einer Temperatur über 35 °C, die bis zu 90 °C gehen kann, und in Anwesenheit eines Beschleunigers, oder dass es sich um eine unter Strahlung vernetzbare Zusammensetzung handelt.

8. Zusammensetzung nach Anspruch 7, **dadurch gekennzeichnet, dass** das Harz Anspruch 3 entspricht, und dass es sich um eine bei Raumtemperatur, nämlich zwischen 15 und 35 °C, oder bei mittlerer Temperatur, nämlich bei einer Temperatur über 35 °C, die bis zu 90 °C gehen kann, transformierbare Zusammensetzung handelt, wobei es sich vorzugsweise um eine chargierte oder nicht chargierte Zusammensetzung für den allgemeinen Gebrauch handelt.

9. Zusammensetzung nach Anspruch 8, **dadurch gekennzeichnet, dass** es sich um eine Zusammensetzung für Beschichtungen, Haftstoffe, Polymerbeton, Mastix oder für die RTM-Injektion, die Projektion und die manuelle Schichtung handelt.

10. Zusammensetzung nach Anspruch 7, **dadurch gekennzeichnet, dass** das Harz einem der Ansprüche 4 bis 6 entspricht und dass es sich um eine Formzusammensetzung bei hoher Temperatur handelt, nämlich bei einer Temperatur über 90 °C, vorzugsweise um eine Formzusammensetzung bei hoher Temperatur für SMC, BMC, Pultrusion.

11. Verwendung eines Harzes nach einem der Ansprüche 1 bis 6, **dadurch gekennzeichnet, dass** es als Bindemittel in einer wärmehärtbaren Zusammensetzung nach einem der Ansprüche 7 bis 10 verwendet wird, wobei das Harz vorzugsweise:
- Anspruch 3 entspricht, und die Verwendung in bei Raumtemperatur oder bei mittlerer Temperatur transformierbaren Zusammensetzungen erfolgt, vorzugsweise für chargierte oder nicht chargierte Zusammensetzungen für Beschichtungen, Haftstoffe, Polymerbeton, Mastix oder für die RTM-Injektion, die Projektion und die manuelle Schichtung, oder,
- einem der Ansprüche 4 bis 6 für die Verwendung in Formzusammensetzungen, vorzugsweise für Formzusammensetzungen bei hoher Temperatur und insbesondere für SMC, BMC, Pultrusion, entspricht.

12. Verwendung einer wärmehärtbaren Zusammensetzung:
- nach Anspruch 7, **dadurch gekennzeichnet, dass** es sich um eine Verwendung in durch Peroxid oder Strahlung vernetzbaren Zusammensetzungen handelt, oder
- nach Anspruch 8, **dadurch gekennzeichnet, dass** es sich um eine Verwendung in bei Raumtemperatur, nämlich zwischen 15 und 35 °C, oder bei mittlerer Temperatur, nämlich bei einer Temperatur über 35 °C, die bis zu 90 °C gehen kann, transformierbaren Zusammensetzungen handelt, vorzugsweise für chargierte oder nicht chargierte Zusammensetzung für den allgemeinen Gebrauch, oder
- nach Anspruch 9, **dadurch gekennzeichnet, dass** es sich um eine Verwendung für Beschichtungen, Haftstoffe, Polymerbeton, Mastix oder für die RTM-Injektion, die Projektion und die manuelle Schichtung handelt, oder
- nach Anspruch 10, **dadurch gekennzeichnet, dass** es sich um eine Verwendung für SMC, BMC, Pultrusion handelt.

13. Herstellungsverfahren eines Harzes nach einem der Ansprüche 1 bis 6, **dadurch gekennzeichnet, dass** es die Substitution durch die Milchsäure in der Zusammensetzung eines ungesättigten Ausgangspolyesters umfasst, von:
i) bis 90 Mol-% Phthalsäureanhydrid der sauren Komponente des Ausgangspolyesters, wobei die saure Komponente in Mol 20 bis 80 % Maleinsäureanhydrid (AM) und/oder Fumarsäure umfasst, und von 80 bis 20 % Phthalsäureanhydrid (AP), und wobei die Polyolkomponente in Mol 50 bis 100 % Propylenglykol (PG) und 0 bis 50 % eines zusätzlichen Polyols umfasst, das aus dem Ethylenglykol (EG) und/oder dem Diethylenglykol (DEG) und/oder dem Dipropylenglykol (DPG) und/oder dem 1,3-Butylenglycol und/oder dem 1,4-Butandiol und/oder dem Neopentylglykol (NPG) ausgewählt ist, oder
ii) bis 100 Mol-% eines Polyols, das aus dem DPG und/oder dem DEG ausgewählt ist, das in einer allgemeinen molaren Ausgangsrate von bis zu 50 % der Polyolkomponente des Ausgangspolyesters vorhanden ist und dessen Polyolkomponente zusätzlich PG umfasst, mit der sauren Komponente des Ausgangspolyesters, die das Maleinsäureanhydrid (AM) oder die Fumarsäure ist,
dass das molare Verhältnis der Milchsäure zur sauren Komponente, ohne Einschluss der Milchsäure, des Polyesters a) 0,4 bis 1,75 beträgt,
und dass der ungesättigte Polyester a) das Reaktionsprodukt in einem Schritt eines Reaktionsgemischs ist, das die sauren Komponenten und Polyole nach ihrer Substitution durch die Milchsäure umfasst, wie in Punkt i) oder ii) definiert.

14. Vernetzte Endprodukte, **dadurch gekennzeichnet, dass** sie Ergebnis der Vernetzung von mindestens einem Harz nach einem der Ansprüche 1 bis 6 oder einer wärmehärtbaren Zusammensetzung nach einem der Ansprüche 7 bis 10 sind.

15. Endprodukte nach Anspruch 14, **dadurch gekennzeichnet, dass**
- sie für den allgemeinen Gebrauch bestimmt sind, und dass sie Ergebnis der Vernetzung von mindestens einem Harz nach Anspruch 3 oder der Vernetzung einer Zusammensetzung nach Anspruch 8 oder 9 sind, wobei die Endprodukte vorzugsweise Beschichtungen, Haftstoffe, Mastix, Polymerbeton oder Schichtstoffe oder RTM-Injektions- oder Projektionsprodukte sind, oder
- es sich um Formteile handelt, insbesondere durch Injektion, Kompression oder Pultrusion und dass sie Ergebnis der Vernetzung von mindestens einem Harz nach einem der Ansprüche 4 bis 6 oder der Vernetzung einer Zusammensetzung nach Anspruch 10 sind.

## Claims

1. An unsaturated polyester resin comprising: a) at least one unsaturated polyester and b) at least one comonomer, copolymerizable with said polyester, **characterized in that** said polyester a) is an unsaturated polyester modified by lactic acid as a substitution in the composition of an initial polyester of:
i) up to 90% by moles of phthalic anhydride of the acid component of said initial polyester, the acid component of which comprises from 20 to 80% by moles of maleic anhydride (MA) and/or fumaric acid, and from 80 to 20% by moles of phthalic anhydride (PA), and the polyol component of which comprises from 50 to 100% by moles of propylene glycol (PG) and from 0 to 50% by moles of an additional polyol selected from ethylene glycol (EG) and/or diethylene glycol (DEG) and/or dipropylene glycol (DPG) and/or butylene glycol-1,3 and/or butane diol-1,4 and/or neopentyl glycol (NPG), or
ii) up to 100% by moles of a polyol selected from DPG and/or DEG, which is present at an initial global molar level ranging up to 50% of the polyol component of said initial polyester and which polyol component additionally comprises PG, with the acid component of said initial polyester being maleic anhydride (MA) and/or fumaric acid,
**in that** the molar ratio of lactic acid relatively to the acid component, without including lactic acid of said polyester a) is from 0.4 to 1.75;
**in that** said unsaturated polyester a) is the reaction product in a step of a reaction mixture comprising said acid components and polyols after their being substituted with lactic acid as defined in point i) or ii).

2. The resin according to claim 1, **characterized in that** said comonomer b) is at least one monomer selected from:
b1) vinyl aromatic monomers, preferably styrene and/or vinyl toluenes and/or di- or tri-vinylbenzenes, α-methyl styrene, more preferentially styrene and/or
b2) (meth)acrylic monomers, preferably selected from: methyl methacrylate (MMA), butyl (meth)acrylate ((M)ABu), isobornyl (meth)acrylate (Ibo (MA)), hydroxyl ethyl (meth)acrylate (HE(M)A), hydroxyl propyl (meth)acrylate (HP(M)A), tetrahydrofurfuryl (meth)acrylate (THF(M)A), butane diol-1,4 di(meth)acrylate (BDD(M)A), diethylene glycol di(meth)acrylate (DEGD(M)A), dipropylene glycol di(meth)acrylate (DPGD(M)A), tripropylene glycol di(meth)acrylate (TPGD(M)A), butylene glycol-1,3 di(meth)acrylate (BGD(M)A), ethylene glycol di(meth)acrylate (EGD(M)A), hexane diol di(meth)acrylate (HDD(M)A), trimethylol propane tri(meth)acrylate (TMPT(M)A), pentaerythritol tetra(meth)acrylate, neopentyl glycol di(meth)acrylate (NPGD(M)A),
b3) allylic monomers, in particular: diallyl phthalate (DAP), allyl glycidyl ether (AGE), allyl methacrylate (AMA), and preferably the comonomer b) is styrene.

3. The resin according to any claims 1 to 2, **characterized in that** said polyester a) modified by lactic acid is as defined according to point i) of claim 1 and **in that**:
- said polyol component PG is substituted with lactic acid at a molar rate ranging up to 40%, preferably ranging up to 30%; and/or
- lactic acid substitutes 25 to 80%, preferably 25 to 60% by moles of said phtalic anhydride (PA).

4. The resin according to any of claims 1 to 2, **characterized in that** said polyester a) modified by a lactic acid is as defined according to point ii) of claim 1, and **in that**:
- only DPG is present as an initial polyol from among DEG and DPG and this up to 50%, preferably 40% by moles, of said polyol component of said initial polyester and this in addition to PG, with said DPG being 100% substituted, by moles, with lactic acid; or
- DPG and DEG are both present as initial polyols in the initial polyester, with an initial DEG/DPG molar ratio ranging from 1/2 to 2/1 and **in that** both are 100% substituted with lactic acid, and **in that** the initial maleic anhydride is also substituted with lactic acid for up to 25% by moles.

5. The resin according to claim 4, **characterized in that** in addition to maleic anhydride and/or to fumaric acid, up to 20% by moles of phthalic anhydride is present in the acid component of the initial polyester and **in that** it is also 100% substituted with lactic acid.

6. The resin according to claim 4, **characterized in that** 100% of said acid component of said initial polyester consists of maleic anhydride and/or fumaric acid; preferably, the lactic acid additionally substitutes up to 40% by moles of maleic anhydride of the initial polyester.

7. A thermosetting composition, **characterized in that** it comprises at least one resin as defined according to any of claims 1 to 6, preferably this is a composition which may be cross-linked with a peroxide, either at a high temperature, i.e. a temperature above the 90°C, or at room temperature, i.e. between 15 and 35°C or at a medium temperature, i.e. at a temperature above 35°C and which may range up to 90°C and in the presence of an accelerator or this is a composition which may be cross-linked by radiation.

8. The composition according to claim 7, **characterized in that** said resin is as defined according to claim 3, and **in that** this is a composition which may be transformed at room temperature, i.e. between 15 and 35°C, or at a medium temperature, i.e. a temperature above 35°C and which may range up to 90°C; preferably this is a composition which is either filled or not filled for general use.

9. The composition according to claim 8, **characterized in that** this is a composition for coatings, adhesives, polymer concrete, sealants or dedicated to RTM injection, to spraying and manual lamination.

10. The composition according to claim 7, **characterized in that** said resin is as defined according to any of claims 4 to 6, and **in that** this is a high temperature molding composition, i.e. at a temperature above 90°C, preferably of a high temperature molding composition for SMC, BMC, pultrusion.

11. The use of a resin as defined according to any of claims 1 to 6, **characterized in that** it is used as a binder in a thermosetting composition as defined according to any of claims 7 to 10, preferably said resin is as defined:
- according to claim 3, and said use is in compositions which may be transformed at room temperature or at a medium temperature, preferably for either filled or non-filled compositions for coatings, adhesives, polymer concrete, sealants, or dedicated to RTM injection, spraying and manual lamination; or
- according to any of claims 4 to 6, for use in molding compositions, preferably for high temperature molding compositions and more preferentially for SMC, BMC, pultrusion.

12. The use or of a thermosetting composition as defined
- according to claim 7, **characterized in that** this is a use in compositions which may be cross-linked by a peroxide or by radiation; or
- according to claim 8, **characterized in that** this is a use in compositions which may be transformed at room temperature, i.e. between 15 and 35°C, or at medium temperature i.e. at a temperature above 35°C and which may range up to 90°C, preferably for either filled or non-filled compositions for general use; or
- according to claim 9, **characterized in that** this is a use for coatings, adhesives, polymer concrete, sealants, or dedicated to RTM injection, spraying and manual lamination, or
- according to claim 10, **characterized in that** this is a use for SMC, BMC, pultrusion.

13. A method for preparing a resin as defined according to any of claims 1 to 6, **characterized in that** it comprises substitution with lactic acid in the composition of an initial unsaturated polyester, of:
i) up to 90% by moles of phthalic anhydride of the acid component of said initial polyester, the acid component of which comprises 20 to 80% by moles of maleic anhydride (MA) and/or fumaric acid, and from 80 to 20% by moles of phthalic anhydride (PA), and the polyol component of which comprises from 50 to 100% by moles of propylene glycol (PG), and from 0 to 50% by moles of an additional polyol selected from ethylene glycol (EG) and/or diethylene glycol (DEG) and/or dipropylene glycol (DPG) and/or butylene glycol-1,3 and/or butane diol-1,4 and/or neopentyl glycol (NPG), or
ii) up to 100% by moles of a polyol selected from DPG and/or DEG, which is present at an initial global molar level ranging up to 50% of the polyol component of said initial polyester and which polyol component additionally comprises PG, with the acid component of said initial polyester being maleic anhydride (AM) and/or fumaric acid;
**in that** the molar ratio of the lactic acid relatively to the acid component without including lactic acid on said polyester a) is from 0.4 to 1.75;
**in that** said unsaturated polyester a) is the reaction product in a step of a reaction mixture comprising said acid components and polyols after their having been substituted with lactic acid as defined in point i) or ii).

14. Cross-linked final products, **characterized in that** the results from the cross-linking of at least one resin as defined according to any of claims 1 to 6 or of a thermosetting composition as defined according to any of claims 7 to 10.

15. The final products according to claim 14 **characterized in that**:
- they are for a general use, and **in that** they result from the cross-linking of at least one resin as defined according to claim 3 or from the cross-linking of a composition as defined according to claim 8 or 9, preferably said final products are coatings, adhesives, sealants, polymer concrete or laminates or RTM injection or spray products; or
- these are molded parts in particular by injection, compression or pultrusion and **in that** they result from the cross-linking of at least one resin as defined according to any of claims 4 to 6, or from the cross-linking of a composition as defined according to claim 10.
